# EUROPEAN PATENT SPECIFICATION

(11) **EP 1 901 566 B1**
(45) Date of publication and mention of the grant of the patent: **23.06.2010**
(21) Application number: 07702200.2
(22) Date of filing: 25.01.2007
(51) Int. Cl.: H04W 4/10

(54) **AQ method and system for sending SMD in trunk group**
Verfahren und System zum Senden von SMD in Bündeln
Procédé et système pour envoyer des SMD dans un faisceau de lignes

(30) Priority: 07.03.2006 CN 200610056999; 18.04.2006 CN 200610075810
(43) Date of publication of application: 19.03.2008
(73) Proprietor: Huawei Technologies Co., Ltd., Longgang District, Shenzhen Guangdong 518129 (CN)
(72) Inventor: HOU, Zhiqiang, Shenzhen 518129, Guangdong P.R. China 11 (CN); DAI, Mingyang, Shenzhen 518129, Guangdong P.R. China 11 (CN); ZHONG, Haiquan, Shenzhen 518129, Guangdong P.R. China 11 (CN); LU, Zhifeng, Shenzhen 518129, Guangdong P.R. China 11 (CN); SHEN, Minjun, Shenzhen 518129, Guangdong P.R. China 11 (CN); YANG, Changdong, Shenzhen 518129, Guangdong P.R. China 11 (CN); DAI, Lili, Shenzhen 518129, Guangdong P.R. China 11 (CN); GAO, Shuliang, Shenzhen 518129, Guangdong P.R. China 11 (CN)
(74) Representative: Körber, Martin Hans
(86) International application number: PCT/CN2007/000282
(87) International publication number: WO 2007/101386

(56) References cited:
- EP-A- 1 542 443
- WO-A1-2005/120095
- CN-A- 1 679 362
- US-A- 6 138 011

## Description

### Field of the Invention

The present invention relates to group call technology of trunk group in a communication system, and particularly, to a method, a system and a terminal for transmitting application data in a trunk group.

### Background of the Invention

Global System for Mobile communications (GSM) is a standard released by European Committee of Standardization in 1992. GSM adopts data communication technology and unified network criteria to guarantee the quality of communication and develop more services for subscribers to choose.

GSM-R, i.e. GSM for railway networks, provides a general communication platform as a railway manage system for staff working in railway networks, so as to meet the ever-increasing demands of railway networks at present and in the future. GSM-R is a system facility designed, constructed and used directly for railway transportation and information service, with such principal functions as railway dispatch communications, station and platform communications, emergency communications, zone communications, business communications and transportation information transmission.

Adopting a network architecture that is similar to the architecture of GSM, GSM-based GT800 digital trunk system further includes application processing platforms for industrial users. Nodes such as a Full Function Node (FFN) and a Group Call Register (GCR) are added into GT800 digital trunk system on the basis of the basic network of GSM to facilitate command and dispatch applications. Further, queue management devices are added to facilitate access of dispatch stations to the network and provide more flexible support for command and dispatch applications. Therefore, the GT800 system has developed a distinctive digital trunk service system with reference to varieties of service functions in mature digital trunk systems and service features of the GSM network. The GT800 system can be applied to such command and dispatch applications as group call, dispatch station examination call, list inquiry call, private call and voice broadcast.

In a GT800 digital trunk system or GSM-R, there are two modes for uplink access in a group call, i.e. 1.0 uplink access mode and 1.5 uplink access mode. As for the 1.0 uplink access mode, a talker occupies a group call channel uplink of a trunk group, so the group call channel uplink of the trunk group in the cell in which the talker is located keeps busy with the presence of the talker. As for the 1.5 uplink access mode, a talker occupies a dedicated channel of a trunk group, so the group call channel uplinks of all cells of the trunk group to which the talker belongs are idle even with the presence of the talker, and therefore a listener may initiate an uplink takeover via group call channel uplinks of cells of the trunk group to which the talker belongs.

EP 1542443 discloses a method for exchanging data in a group call process. The method includes: broadcasting state information of an uplink in a downlink, permitting a listener to transmit data when the uplink is available and a request from the listener is received; and broadcasting busy information of the uplink in the downlink.

However, in a GSM-based wireless communication system with a group call function, application data cannot be transmitted in the 1.5 uplink access mode during a voice transmission, i.e. data and voice cannot be transmitted synchronously. Therefore, it is impossible to provide services that require synchronous transmission of data and voice. Generally, the data in such services refers to application data which is fixed and considerably short information. The content of the application data may be predefined content.

### Summary

Embodiments of the present invention provide a method, a system, and a terminal for synchronously transmitting application data and voice in a trunk group. According to the method, application data transmission can be implemented in a trunk group that adopts the 1.5 uplink access mode and allows Push to Talk (PTT) takeover, and therefore synchronous transmission of data and voice can be realized.

The present invention is achieved through the following technical scheme:
A method for synchronously transmitting application data and voice in trunk group includes:
   sending, by a talker or a listener, application data which contains predefined content to network side of a wireless communication system, wherein the application data from the talker which occupies a dedicated channel uplink of a trunk group is transmitted via the dedicated channel uplink, and the application data from the listener is transmitted via a group call channel uplink of the trunk group when the group call channel uplink of the trunk group is occupied by the listener;
   receiving, by the network side of the wireless communication system, the application data sent from the talker or the listener, and broadcasting the application data in the trunk group.

A system for synchronously transmitting application data and voice in trunk group includes a network side device and at least one terminal, wherein
the at least one terminal is configured to send application data which contains predefined content to the network side device via a dedicated channel uplink or a group call channel uplink of a trunk group; and
the network side device is configured to receive the application data sent from the terminal, and broadcast the application data received in the trunk group.

A terminal for synchronously transmitting application data and voice in a trunk group includes:
a first unit, configured to send application data which contains predefined content to a network side device via a dedicated channel uplink; and
a second unit, configured to send the application data to the network side device via a group call channel uplink of a trunk group.

As a result, according to the method and the system provided by the embodiments of the present invention, data transmission can be implemented in the trunk group in which the 1.5 uplink access mode is adopted and PTT takeover is allowed, and therefore synchronous transmission.of data and voice can be realized.

### Brief Description of the Drawings

Figure 1 is a simplified flow chart illustrating a method for transmitting application data by a talker according to an embodiment of the present invention.
Figure 2 is a simplified flow chart illustrating a method for transmitting application data by a talker across BSCs according to an embodiment of the present invention.
Figure 3 is a simplified flow chart illustrating a method for transmitting application data by a talker to a specified listener according to an embodiment of the present invention.
Figure 4 is a simplified flow chart illustrating a method for transmitting application data by a listener according to an embodiment of the present invention.
Figure 5 is a simplified flow chart illustrating a method for transmitting application data by a listener across BSCs according to an embodiment of the present invention.
Figure 6 is a simplified flow chart illustrating a method for transmitting application data by a listener to a specified receiver according to an embodiment of the present invention.
Figure 7 is a simplified flow chart illustrating a method for retransmitting application data according to an embodiment of the present invention.

### Detailed Description of the Invention

The present invention is described as follows in detail with reference to the accompanying drawings as well as embodiments so as to make the objective, technical solution and merits of the present invention more apparent.

According to the method provided by embodiments of the present invention, application data transmission can be implemented without interrupting voice transmission in a trunk group that adopts the 1.5 uplink access mode and allows PTT takeover, i.e. data and voice can be broadcast synchronously. In other words, data and voice are transmitted synchronously in the trunk group in which the 1.5 uplink access mode is adopted and PTT takeover is allowed in a wireless communication system with the group call function.

In the 1.5 uplink access mode, a dedicated channel of the trunk group is occupied by a talker and application data is transmitted via the dedicated channel uplink occupied by the talker. A listener transmits the application data on a group call channel uplink of the trunk group of the cell in which the listener is located, i.e. the listener occupies the group call channel uplink of the trunk group with extended Access Burst (AB) messages to transmit the application data. When the listener transmits the application data, the group call channel uplink of the trunk group is occupied. However, in order to transmit data and voice synchronously, the uplink access should be isolated from normal uplink access so as not to influence the talker who occupies the dedicated channel uplink or other listeners who occupy group call channel uplinks in normal processes. Therefore, according to embodiments of the present invention, the network side of the wireless communication system with the group call function may recognize the uplink access of the application data upon receipt of the extended AB message.

According to embodiments of the present invention, no matter the message carrying the application data is transmitted by the listener or the talker, a message that carries the application data is properly defined so that the network side of the wireless communication system can learn about the message upon receipt of the application data. Upon receipt of the message carrying the application data, the network side of the wireless communication system broadcasts the application data on a group call channel downlink of the trunk group and a dedicated channel downlink occupied by the talker.

The processes of transmitting the application data by the talker and the listener are described as follows in detail respectively.

The talker transmits the application data.

If a group call has been initiated in the trunk group, the talker of the trunk group resides in a dedicated channel and transmits a voice message to the network side of the wireless communication system via a dedicated channel uplink occupied by the talker, the network side of the wireless communication system broadcasts the voice message from the talker to listeners via a group call channel downlink of the trunk group of the talker. Then, the talker needs to transmit the application data, and the talker carries the application data in a layer-3 message and transmits the message via the dedicated channel uplink occupied by the talker to the network side of the wireless communication system. The application data carried in the layer-3 message is broadcast by the network side of the wireless communication system via the group call channel downlink of the trunk group and the dedicated channel downlink occupied by the talker.

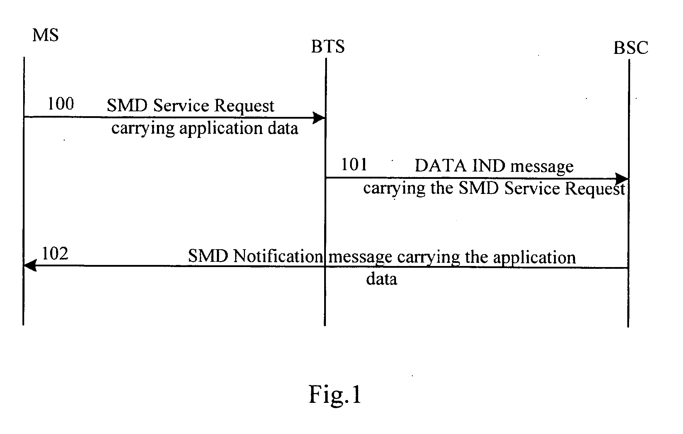

Figure 1 is a simplified flow chart illustrating a method for transmitting application data by a talker according to an embodiment of the present invention. Network entities used in the method include a Base Transceiver Station (BTS) and a Base Station Controller (BSC) on the network side of the wireless communication system as well as a Mobile Station (MS). The MS is a talker in a trunk group; the BTS and BSC are in the cell in which the talker is located. The method includes the following processes.

In block 100, the MS transmits a layer-3 message frame (I frame), i.e. a Short Message Data (SMD) Service Request carrying application data, to the BTS via a dedicated channel uplink occupied by the MS.

The dedicated channel uplink occupied by the MS may be a Fast Associated Control Channel (FACCH) uplink.

The SMD Service Request may further carry the identity of the MS, for example the International Mobile Subscriber Identity (IMSI) of the MS.

In block 101, the BTS transfers the SMD Service Request to the BSC using a Data Indication (DATA IND) message.

In block 102, upon receipt of the SMD Service Request, the BSC acquires the application data carried in the SMD Service Request, carries the application data in an SMD notification message, and broadcasts the message via a group call channel downlink of the trunk group of the MS and a dedicated channel downlink occupied by the MS.

The group call channel downlink and the dedicated channel downlink occupied by the MS used for broadcasting application data may be FACCHs.

In a conventional method, a BSC may manage multiple cells. The SMD notification message may be broadcast in all cells of trunk groups which the MSs managed by the BSC belong to.

The SMD notification message may further carry the identity of the MS, e.g. the IMSI of the MS.

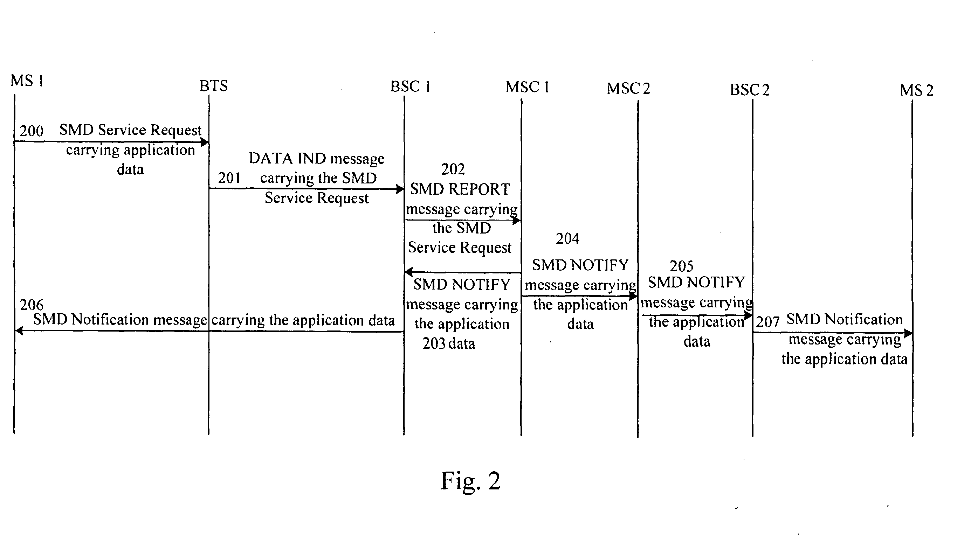

According to the embodiment of the present invention, when a trunk group bestrides multiple BSCs, application data can also be transmitted across BSCs. As shown in Figure 2, BSC1 and BTS1 are the home BSC and BTS of MS1, i.e. a talker; BSC2 and BTS2 are another BSC and BTS managing the area of the trunk group, MS2 is a listener in the trunk group managed by BSC2, and BSC1 and BSC2 are managed by Mobile Switching Center (MSC). The method of transmitting the application data by the talker includes the following processes.

In block 200, MS 1 transmits an SMD Service Request carrying the application data to BTS1 via a dedicated channel uplink occupied by MS 1.

The dedicated channel uplink occupied by MS1 may be a FACCH uplink.

The SMD Service Request may further carry the identity of MS1.

In block 201, BTS1 transfers the SMD Service Request to BSC1 with a DATA IND message.

In block 202, BSC1 transfers the SMD Service Request to MSC1 in an SMD REPORT message.

In blocks 203-204, upon receipt of the SMD Service Request, MSC1 acquires the application data, and transmits the application data to BSC1 and MSC2 in an SMD NOTIFY message.

According to the embodiment of the present invention, the SMD NOTIFY message is different from the SMD Notification message in that the SMD NOTIFY message is an uplink message while the SMD Notification message is a downlink message.

In block 205, MSC2 transfers the received SMD NOTIFY message to BSC2.

From blocks 206 to 207, BSC1 broadcasts the application data received from the SMD NOTIFY message adopting an SMD Notification message via a group call channel downlink of the trunk group managed by BSC1 and a dedicated channel downlink occupied by the talker. BSC2 broadcasts the application data received from the SMD NOTIFY message adopting an SMD Notification message via the group call channel downlink of the trunk group managed by BSC2.

When the application data is transmitted across BSCs, an application data forwarding indication is set in each of the BSCs on the network side of the trunk system. Upon receipt of the application data, the BSC determines, according to the indication, whether to broadcast the received application data in the area managed by BSC or to forward the application data to MSC, so that MSC broadcasts the application data in the area managed by the MSC.

Accordingly, the MSC may transmit the application data to BSCs with the application data forwarding indication.

According to the embodiment of the present invention, a talker, while transmitting application data, may appoint a specific listener in a trunk group to receive the application data, so that the influence made by the application data to the voice quality on a dedicated channel occupied by the talker, e.g. the FACCH, as well as the interference brought by the application data to other listeners who receive voice information via a group call channel downlink of the trunk group, can be avoided.

The application data transmission from the talker to a specified listener in the trunk group is different from the transmission process in Figure 1 in that the application data transmitted by the talker to the network side of the trunk system carries a specified listener identity for indicating the listener to which the application data are transmitted. Upon receipt of the specified listener identity, the network side of the trunk group determines the area in which the listener with the identity is located, and broadcasts the application data in the area.

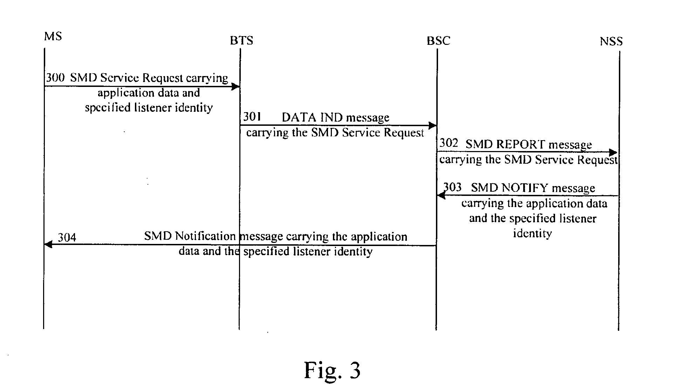

Figure 3 is a simplified flow chart illustrating a method for transmitting application data by a talker to a specified listener according to an embodiment of the present invention. Network entities in the method include an MS, a BTS on the network side of the wireless communication system, a BSC and a Network Sub-System (NSS). The MS is a talker in a trunk group, the BTS and the BSC are in the cell in which the talker is located, and the NSS is used for managing the trunk group of the talker. The NSS includes multiple MSCs and a Visitor Location Register (VLR), and one MSC may transfer a message to another MSC in the NSS. The method for transmitting the application data includes the following processes.

In block 300, the MS transfers a layer-3 message frame (I frame), i.e. an SMD Service Request carrying the application data and a specified listener identity, to the BTS via a dedicated channel uplink occupied by the MS.

The specified listener identity may be the IMSI or the Mobile Subscriber Integration Service Digital Network (MSISDN) of the specified listener.

In block 301, the BTS transfers the SMD Service Request to the BSC using a DATA IND message.

In block 302, the BSC transfers the SMD Service Request to the NSS using an SMD REPORT message.

In block 303, upon receipt of the SMD Service Request, the NSS acquires the application data and the specified listener identity in the request, determines the area in which the listener with the identity is located, and forwards the application data and the specified listener identity in an SMD NOTIFY message to the BSC which manages the area (in Figure 3, it is the BSC that manages the MS).

Upon receipt of the SMD Service Request, the NSS determines whether the SMD Service Request carries the specified listener identity. If the SMD Service Request does not carry the specified listener identity, the NSS carries the application data in an SMD Notification message and broadcasts the SMD Notification message via the BSC according to the process shown in Figure 2. If the SMD Service Request carries the specified listener identity, the MSCs and the VLR in the NSS interact in accordance with a conventional method and determine whether the listener with the specified listener identity has subscribed the trunk group of the MS. If the listener has subscribed the trunk group, the area in which the listener with the specified listener identity is located is searched according to a conventional method, and the application data carried in an SMD NOTIFY message is transmitted to the BSC managing the area, otherwise the SMD Service Request is discarded.

In block 304, the BSC managing the area broadcasts the application data and the specified listener identity in an SMD Notification message via a group call channel downlink of the trunk group in the area (in Figure 3, via the group call channel downlink of the trunk group of the MS and a dedicated channel downlink occupied by the MS).

If the talker is not located in the area managed by the BSC, the application data is not broadcast via the dedicated channel downlink occupied by the MS.

The listener transmits application data.

No matter there is a talker in a trunk group in which a group call has already been initiated or not, a group call channel uplink is always idle in the 1.5 uplink access mode. A listener can transmit an extended AB message via the group call channel uplink of the trunk group of the cell in which the listener is located. The extended AB message carries an establishment cause requesting to occupy the group call channel uplink of the trunk group of the cell in which the listener is located to transmit application data. After that, the listener may transmit the application data via the occupied group call channel uplink of the trunk group of the cell in which the listener is located. The format of the extended AB message is shown in Table 1.

The format of the extended AB message is shown in Table 1.

**Table 1**

| | |
|---|---|
| Information value 8......1 | Establishment Cause |
| 0110xxxx | Transmit application data |

When the extended AB message carries the value 0110, the message is used for requesting to occupy the group call channel uplink of the trunk group of the cell of in which the listener is located to transmit the application data. Obviously, other binary values can also be set in the extended AB message in the embodiment of the present invention, as long as the network side of the wireless communication system can recognize, according to preset rules, that the binary value in the extended AB message indicates a request for occupying the group call channel uplink of the trunk group of the cell in which the listener is located to transmit the application data.

The use of extended AB message in the embodiment provides the following merits.

First, uplink access of the application data is separated from other uplink access such as uplink takeover, and accordingly, the network side of the wireless communication system may certainly broadcast the application data upon receipt of the extended AB message. Second, as for the uplink access of the application data, it is not necessary to send uplink request (UPLINK REQ) to the MSC on the network side of the wireless communication system as in the uplink takeover process, and therefore voice transmission carried out by the talker in the group call of the trunk group is not influenced. Third, as for the uplink access of the application data, the BSC may handle the uplink access of the application data separately based the home cell of the listener, therefore the transmission of the extended AB message and application data in the home cell of the listener does not affect the application data transmission or uplink takeover in other cells of the trunk group. Fourth, the uplink access of the application data does not include message interaction through an interface A between the BSC and the MSC on the network side of the wireless communication system as the uplink takeover does, so application data messages may not be extended by the interface A.

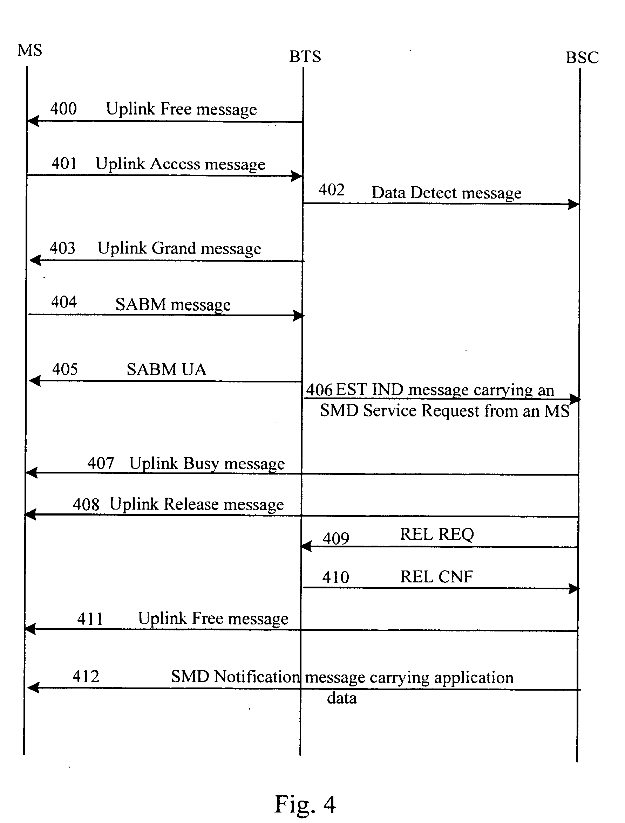

Figure 4 is a simplified flow chart illustrating a method for transmitting application data by a listener according to an embodiment of the present invention. Network entities used in the method include a BTS and a BSC on the network side of the wireless communication system and an MS. The MS is a listener in a trunk group; the BTS and the BSC are in the cell in which the listener is located. The method includes the following processes.

In block 400, the BTS transmits an uplink free message in the cell managed by the BTS.

In 1.5 uplink access mode, when PTT takeover is allowed, whether a talker in the trunk group is talking over a dedicated channel or not, as long as the group call channel uplink of the trunk group is not occupied by the MS, the BTS will transmit the uplink free message.

In block 401, the MS transmits an uplink access message, indicating that the MS requests to occupy the group call channel uplink of the trunk group in the cell in which the listener is located to transmit application data. The uplink access message is an extended AB message carrying an establishment cause defined in the embodiment of the present invention indicating that the group call channel uplink of the trunk group is requested to be occupied for transmitting the application data.

In block 402, the BTS transmits a data detect message to the BSC, notifying that the MS requests to occupy the group call channel uplink of the trunk group in the cell in which the MS is located to transmit the application data.

The format of the data detect message is identical with that of a talker detect message sent by the BTS to the BSC when a listener initiates an uplink access according to a conventional method. However, processes of processing the data detect message and that of processing the talker detect message by the BSC are different. Message interaction with the MSC is not required in the process of processing the data detect message; hence voice transmission from the talker in the trunk group may not be affected by the transmission of the application data.

In block 403, the BTS transmits an uplink grand message to the MS.

In block 404, the MS transmits a Set Asynchronous Balanced Mode (SABM) message to the BTS. The message carries an SMD Service Request which includes the application data and the IMSI of the MS.

The SABM message is a layer-3 message.

In block 405, the BTS transmits an Unnumbered Acknowledge (UA) to the MS in answer to the SABM message.

In block 406, the BTS transmits an establish link indication (EST IND) message to the BSC, and the message carries the SMD Service Request from the MS.

Blocks 405 and 406 can be performed in an inverse order.

In block 407, the BSC broadcasts an uplink busy message in the cell in which the MS is located at present, notifying in the cell in which the MS is located at present that the group call channel uplink of the trunk group is busy.

In the uplink takeover process of the conventional method, the BSC broadcasts the uplink busy message in all cells of the trunk group managed by the BSC. In the uplink access mode provided by the present invention for transmitting the application data, the BSC merely broadcasts the uplink busy message in the cell in which the MS is located at present so that the application data transmitted in different cells of the trunk group is isolated from each other and the uplink request of the application data or the uplink takeover processes in other cells are not influenced by transmitting the application data in the cell in which the MS is located at present.

In block 408, the BSC transmits an uplink release message to the MS via the group call channel uplink to release the group call channel uplink occupied by the MS.

In block 409, the BSC transmits a release request (REL REQ) to the BTS to instruct the BTS to release the group call channel uplink occupied by the MS.

In block 410, having released the group call channel uplink occupied by the MS, the BTS transmits a release confirm (REL CNF) message to the BSC to confirm that the group call channel uplink occupied by the MS has been released.

In block 411, the BSC broadcasts the uplink free message in the cell in which the MS is located at present to indicate that other MSs and the MS in the cell may initiate an uplink request of the application data or an uplink takeover process.

In block 412, the BSC broadcasts an SMD Notification message including the application data in all cells of the trunk group managed by the BSC.

The broadcast made by the BSC in all cells of the trunk group managed by the BSC includes transmitting the SMD notification message via all group call channel downlinks and the dedicated channel downlink occupied by the talker of the trunk group.

When the trunk group does not have the dedicated channel occupied by the talker, the notification is just transmitted via all group call channel downlinks of the trunk group.

The SMD Notification message may further carry the IMSI of the MS.

According to the conventional method, a BSC may manage multiple cells and broadcast the SMD notification message in cells of trunk groups that include all MSs managed by the BSC.

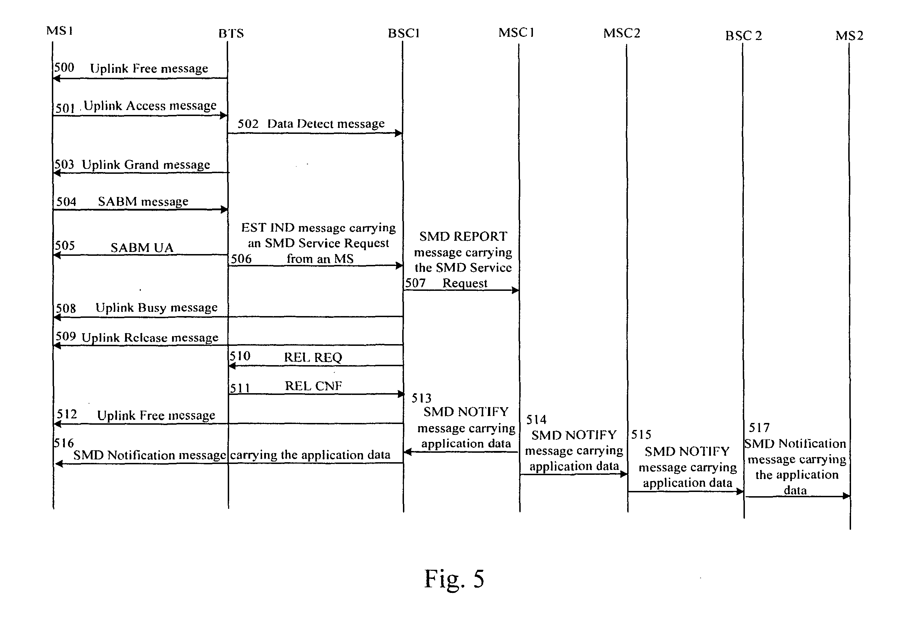

In the present invention, when multiple BSCs are included in a trunk group, application data can also be transmitted across BSCs. As shown in Figure 5, BSC1 and BTS1 are the home BSC and BTS of MS1, i.e. a listener, BSC2 and BTS2 are another BSC and BTS in the zone of the trunk group, MS2 is another listener or a talker managed by BSC2 in the trunk group. MSC1 manages BSC1, MSC2 manages BSC2. The method of transmitting application data by the listener includes the following processes.

In block 500, BTS1 transmits an uplink free message of the trunk group in the cell managed by BTS 1.

In block 501, MS1 transmits an uplink access message, requesting to occupy a group call channel uplink of the trunk group in the cell in which MS1 is located at present to transmit the application data. The uplink access message is an extended AB message carrying an establishment cause defined by the present invention to indicate that the message requests to occupy the group call channel uplink of the trunk group to transmit the application data.

In block 502, BTS1 transmits a data detect message to BSC1 to notify that MS1 requests to occupy the group call channel uplink of the trunk group in the cell in which the MS1 is located for transmitting the application data.

The format of the data detect message is identical with that of a tal ker detect message sent by the BTS to the BSC in an uplink takeover process, however, BSC1 processes the data detect message and talker detect message via different processes. No message interaction with MSC1 is performed in the process of the data detect message; hence the voice transmission from the talker in the trunk group is not affected by transmitting the application data.

In block 503, BTS1 transmits an uplink grand message to MS1.

In block 504, MS1 transmits an SABM message to BTS 1; here the message carries an SMD Service Request which includes the application data and the IMSI of MS 1.

The SABM message is a layer-3 message.

In block 505, BTS 1 transmits an UA of the SABM to MS 1.

In block 506, BTS1 transmits to BSC1 an EST IND message carrying the SMD Service Request from MS 1.

In block 507, BSC1 transfers the SMD Service Request to MSC1 with an SMD REPORT message.

In block 508, BSC1 broadcasts an uplink busy message in the cell in which MS1 is located at present, notifying that the group call channel uplink of the trunk group is busy in the cell.

In block 509, BSC1 transmits an uplink release message to MS1 via the group call channel uplink to release the group call channel uplink occupied by MS1.

In block 510, BSC1 transmits a REL REQ to BTS1 to instruct BTS1 to release the group call channel uplink occupied by MS 1.

In block 511, having released the group call channel uplink occupied by MS1, BTS1 transmits a REL CNF to BSC1 to confirm that the group call channel uplink occupied by MS1 has been released.

In block 512, BSC1 broadcasts an uplink free message in the cell in which MS1 is located at present to indicate that other MSs and MS1 in the cell may initiate an uplink request of the application data for transmitting the application data or an uplink takeover process.

In blocks 513-514, upon receipt of the SMD Service Request, MSC1 acquires the application data and transmits the application data to BSC1 and MSC2 in an SMD NOTIFY message.

In block 515, MSC2 transfers the SMD NOTIFY message to BSC2.

From block 516 to block 517, BSC1 broadcasts the application data received from the SMD NOTIFY message via a group call channel downlink of the trunk group managed by BSC1 and a dedicated channel downlink occupied by the talker of the trunk group in an SMD Notification message. BSC2 also broadcasts the application data received carried in the SMD NOTIFY message via the group call channel downlink of the trunk group managed by BSC2 in an SMD Notification message.

When the application data is transmitted across BSCs, an application data forwarding indication is set in each of the BSCs on the network side of the trunk system. Upon receipt of the application data, the BSC determines, according to the indication, whether to broadcast received application data in the area managed by the BSC or to forward the application data to the MSC which broadcasts the application data in the area managed by the MSC.

According to the embodiment of the present invention, a listener may appoint a specific listener or a talker in a trunk group to receive application data when transmitting the application data. Therefore, the influence made by the application data to the voice quality on a dedicated channel occupied by the talker, e.g. the FACCH, as well as interference brought by the application data to other listeners who receive voice messages via a group call channel downlink of the trunk group, can be avoided.

The method for transmitting the application data from the listener to a specified listener in the trunk group is different from the method in Figure 4 in that the application data transmitted by the listener to the network side of the trunk system carries a specified receiver identity for indicating the listener or talker to which the application data is transmitted. Upon receipt of the specified receiver identity, the network side of the trunk group determines the area in which the listener or talker with the identity is located, and broadcasts the application data in the area.

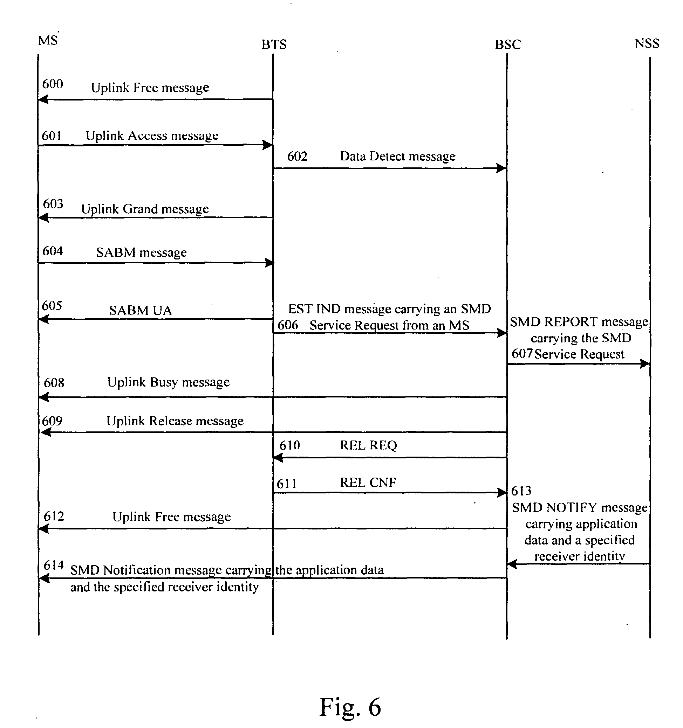

Figure 6 is a simplified flow chart illustrating a method for transmitting application data by a listener to a specified receiver according to an embodiment of the present invention. Network entities used in the method include an MS, a BTS on the network side of the wireless communication system, a BSC and an NSS. The MS is the listener in the trunk group, the BTS and the BSC are in the cell in which the listener is located, and the NSS is an NSS for managing the trunk group of the listener. MSCs and a VLR are included in the NSS, and messages can be transferred from one MSC to another MSC in the NSS. The method for transmitting the application data includes the following processes.

In block 600, the BTS transmits an uplink free message of the trunk group in cells managed by the BTS.

In block 601, the MS transmits an uplink access message, requesting to occupy a group call channel uplink of the trunk group in the cell in which the MS is located to transmit the application data.

In block 602, the BTS transmits a data detect message to the BSC.

In block 603, the BTS transmits an uplink grand message to the MS.

In block 604, the MS transmits an SABM message to the BTS; here the message contains an SMD Service Request which includes the application data and the specified receiver identity.

In block 605, the BTS transmits an UA to the MS.

In block 606, the BTS transmits to the BSC an EST IND message carrying the SMD Service Request from the MS.

Steps in blocks 605 and 606 can be performed in an inverse order.

In block 607, the BTS transmits to the NSS an SMD REPORT message carrying the SMD Service Request from the MS.

Upon receipt of the SMD Service Request, the NSS determines whether the request carries the specified receiver identity. If the request does not carry the specified receiver identity, the application data carried in an SMD Notification message is broadcast via the BSC according to the method shown in Figure 5. If the request carries the specified receiver identity, the MSCs and the VLR in the NSS interact in accordance with the conventional method to determine whether the listener with the specified receiver identity or the talker has subscribed in the trunk group of the MS. If the listener or talker has subscribed in the trunk group, the area in which the listener with the specified receiver identity is located is searched according to the conventional method, otherwise the SMD Service Request is discarded.

In block 608, the BSC broadcasts an uplink busy message in the cell in which the MS is located at present.

In block 609, the BSC transmits an uplink release message to the MS via the group call channel uplink.

In block 610, the BSC transmits an REL REQ to the BTS.

In block 611, having released the group call channel uplink occupied by the MS, the BTS transmits an REL CNF to the BSC.

In block 612, the BSC broadcasts an uplink free message in the cell in which the MS is located at present.

In block 613, the NSS transmits the application data and the specified receiver identity in an SMD NOTIFY message to the BSC managing the determined area (in Figure 6, the BSC manages the MS).

In block 614, the BSC managing the determined area broadcasts application data and the specified receiver identity in an SMD Notification message via a group call channel downlink of the trunk group in the area (in Figure 6, via the group call channel downlink of the trunk group of the MS and a dedicated channel downlink occupied by the talker).

If the talker does not locate in the area managed by the BSC, the application data is not broadcast via the dedicated channel downlink occupied by the MS.

According to embodiments of the present invention, through location update in a conventional method, the MSCs cannot pinpoint the cell in which the listener with the specified receiver identity is located, but just the area in which the listener with the specified receiver identity is located. Hence the NSS may just forward the application data in an SMD NOTIFY message to the BSC that manages the area.

According to embodiments of the present invention, upon receipt of an SMD Notification message, the listener or talker in the trunk group determines whether the SMD Notification message carries the specified receiver identity. If the SMD Notification message does not carry the specified receiver identity, the listener or talker accepts the application data in the SMD Notification message. If the SMD Notification message carries the specified receiver identity, the listener or talker further determines whether the specified receiver identity is identical with the identity of the listener or talker itself. If the specified receiver identity is identical with the identity of the listener or talker, the listener or talker accepts the application data in the SMD Notification message; otherwise, the listener or talker discards the SMD Notification message.

An embodiment of the present invention provides a function of re-broadcasting the SMD Notification message by the BSC to improve the reliability of transmitting application data. In the embodiment, the number of re-broadcasting times and re-broadcasting interval are configured for the SMD Notification message in the BSC. The value range of the re-broadcasting times is 0 to 5, and the value range of the re-broadcasting interval is 100 - 1000ms, here 0 indicates that no re-broadcasting is required. Default re-broadcasting may be available in the BSC, and in default re-broadcasting mode, the SMD Notification message may be re-broadcasting twice at an interval of 500ms.

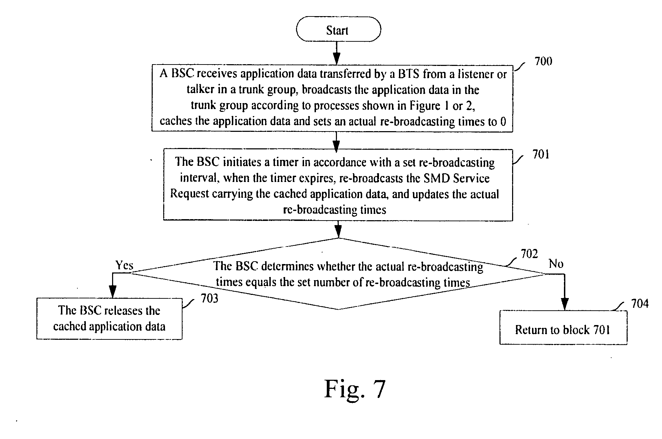

Figure 7 is a simplified flow chart illustrating a method for retransmitting application data according to an embodiment of the present invention. Network entities used in the method include a BSC on the network side of the wireless communication system, a BTS and a listener or talker in a trunk group. The method for transmitting application data includes the following processes.

In block 700, the BSC receives the application data transferred by the BTS from the listener or talker of the trunk group, broadcasts the application data in the trunk group according to the processes in Figure 1 or 2, caches the application data and sets an actual re-broadcasting number of times to 0.

In block 701, the BSC initiates a timer in accordance with the set re-broadcasting interval, and when the timer expires, the BSC re-transfers the SMD Notification message which carries the cached application data, and updates the actual re-broadcasting times.

The timer is set at the group call level of the trunk group, and a timer is set for each of trunk groups in the BSC.

In block 702, the BSC determines whether the actual re-broadcasting times are greater than the set re-broadcasting times. If the actual re-broadcasting times are greater than the set re-broadcasting times, proceeds to block 703, otherwise proceeds to block 704.

In block 703, the BSC releases the cached application data and terminates the process.

In block 704, return to block 701 for further process.

When new application data is transmitted to the BSC in the trunk group, the BSC stops the timer, releases the cached application data, caches the newly received application data and performs the blocks in Figure 7.

According to the method provided by the embodiments of the present invention, in such a wireless communication system as a GSM-based wireless communication system with the group call function, synchronous data and voice transmission can be achieved via the group call channel downlink of the trunk group which adopts 1.5 uplink access mode and allows PTT takeover. The application data from a listener or talker can be transmitted while the talker is talking in the trunk group in which 1.5 uplink access mode is adopted and PTT takeover is allowed.

The embodiments of the present invention also provide a system for transmitting application data in a trunk group. The system includes a terminal and a network side device in the trunk group. The terminal is used for sending the application data to the network side device via a dedicated channel occupied by the terminal or via a group call channel uplink of the trunk group in the cell in which the terminal is located, and the network side device is used for receiving the application data from the terminal and broadcasting the application data received in the trunk group.

According to the embodiments of the present invention, when the terminal is a talker in the trunk group, the terminal transmits the application data via the dedicated channel occupied by the terminal; when the terminal is a listener in the trunk group, the terminal transmits the application data via the group call channel uplink of the trunk group of the cell in which the terminal is located.

Embodiments of the present invention redefine a message used by a talker or listener in a trunk group for transmitting application data. Upon receipt of the message from the talker or listener, the network side of the wireless communication network can recognize that the message is used for application data transmission, and broadcast in the trunk group the application data that is sent from the talker or listener. In embodiments of the present invention, the application data transmission process and voice transmission process are configured to be two independent processes, the application data transmission process and uplink takeover process in the trunk group are configured to be two independent processes. An extended Access Burst (AB) message is adopted in application data transmission from the listener so that the network side of the wireless communication system can recognize that the received message is an uplink request of the application data, and the received application data is broadcast in the trunk group. As a result, according to the method and the system provided by the embodiments of the present invention, data transmission can be implemented in the trunk group that adopts the 1.5 uplink access mode and allows PTT takeover, and therefore synchronous transmission.of data and voice can be realized.

It should be emphasized that the above embodiments, particularly, any embodiments, are merely possible examples of implementations, merely set forth for a clear understanding of the principles of the invention. Many variations and modifications may be made to the above preferred embodiments without departing substantially from the invention. All such modifications and variations are intended to be included within the scope of this disclosure and the above preferred embodiments and protected by the following claims.

## Claims

1. A method for synchronously transmitting application data and voice in a trunk group, **characterized by** comprising:
sending, by a talker or a listener, application data which contains predefined content to network side of a wireless communication system, wherein the application data and voice data from the talker which occupy a dedicated channel uplink of a trunk group are transmitted via the dedicated channel uplink, and the application data from the listener is transmitted via a group call channel uplink of the trunk group when the group call channel uplink of the trunk group is occupied by the listener;
receiving, by the network side of the wireless communication system, the application data sent from the talker or the listener, and broadcasting the application data in the trunk group.

2. The method of Claim 1, wherein sending, by the talker, the application data to the network side of the wireless communication system comprises:
sending, by the talker, a message to the network side of the wireless communication system via the dedicated channel uplink occupied by the talker, wherein the message carries the application data.

3. The method of Claim 2, wherein sending, by the talker, the message to the network side of the wireless communication system via the dedicated channel uplink occupied by the talker comprises:
sending, by the talker, the message to a Base Transceiver Station, BTS, on the network side of the wireless communication system via the dedicated channel uplink occupied by the talker (100) (200) (300); and
transferring, by the BTS, the message carrying the application data to a Base Station Controller, BSC1, on the network side of the wireless communication system (101) (201) (301).

4. The method of Claim 3, wherein receiving, by the network side of the wireless communication system, the application data sent from the talker, and broadcasting the application data comprises:
receiving, by BSC1, the message carries the application data, and transferring the message to Mobile Switching Center, MSC1 to which BSC1 belongs (202);
obtaining, by MSC1, the application data carried in the message, transferring a first notification message carrying the application data to BSC1 (203), and transferring the application data to MSC2 to which BSC2 belongs (204);
broadcasting, by BSC1, the application data via a group call channel downlink of the trunk group managed by BSC1 and a dedicated channel downlink occupied by the talker (206);
transferring, by MSC2, a second notification message carrying the application data to BSC2 (205); and
broadcasting, by BSC2, the application data via a group call channel downlink of the trunk group managed by BSC2 (207).

5. The method of Claim 3, wherein receiving, by the network side of the wireless communication system, the application data sent from the talker, and broadcasting the application data comprises:
receiving, by BSC1, the message carrying the application data (201); and
broadcasting, by BSC1, the application data via a group call channel downlink of the trunk group and a dedicated channel downlink occupied by the talker (206).

6. The method of Claim 5, further comprising:
setting a first application data forwarding indication in BSC1.

7. The method of any of Claims 2 to 6, wherein
the message further carries an identity of the talker.

8. The method of Claim 1, wherein sending, by the listener, the application data to the network side of the wireless communication system comprises:
sending, by the listener, a Set Asynchronous Balanced Mode, SABM, message to the network side of the wireless communication system via the group call channel uplink of the trunk group (404) (504) (604), wherein the SABM message carries the application data and an identity of the listener.

9. The method of Claim 8, wherein receiving, by the network side of the wireless communication system, the application data sent from the listener, and broadcasting the application data comprises:
receiving, by BSC3 on the network side of the wireless communication system, the SABM message carrying the application data (506), and transferring the SABM message to MSC3 to which BSC3 belongs (507);
obtaining, by MSC3, the application data, transferring a third notification message carrying the application data to BSC3 (513), and transferring the application data to MSC4 to which BSC4 belongs (514);
broadcasting, by BSC3, the application data via a group call channel downlink of the trunk group managed by BSC3 and a dedicated channel downlink occupied by the talker (516);
transferring, by MSC4, a fourth notification message carrying the application data to BSC4 (515); and
broadcasting, by BSC4, the application data via a group call channel downlink of the trunk group managed by BSC4 (517).

10. The method of Claim 8, wherein receiving, by the network side of the wireless communication system, the application data sent from the listener, and broadcasting the application data comprises:
receiving, by BSC3, the SABM message carrying the application data (506); and
broadcasting, by BSC3, the application data via a group call channel downlink of the trunk group managed by BSC3 and a dedicated channel downlink occupied by the talker (516).

11. The method of Claim 10, further comprising:
setting a second application data forwarding indication in BSC3,

12. The method of any of Claims 8 to 11, wherein before sending, by the listener, the SABM message, the method further comprises:
sending, by the listener, an Uplink Access message to the network side of the wireless communication system (401) (501) (601); and
sending, by the network side of the wireless communication system, an Uplink Grand message (403) (503) (603).

13. The method of Claim 12, wherein
the Uplink Access message carries an establishment cause, wherein the establishment cause indicates that the Uplink Access message is used for sending the application data.

14. The method of any of Claims 8 to 11, wherein after sending, by the listener, the SABM message, the method further comprises:
sending, by the network side of the wireless communication system, an Unnumbered Acknowledge, UA, of the SABM message to the listener (405) (505) (605).

15. The method of any of Claims 8 to 11, further comprising:
releasing the group call channel uplink occupied by the listener.

16. The method of Claim 1, further comprising:
re-broadcasting the application data.

17. The method of Claim 16, further comprising: setting re-broadcasting interval and re-broadcasting times, wherein re-broadcasting the application data comprises:
caching, by the network side of the wireless communication system, the application data (700);
initiating a timer set for the trunk group, broadcasting the cached application data via a dedicated channel downlink occupied by the talker and a group call channel downlink after waiting for the period of the re-broadcasting interval, and updating actual re-broadcasting times (701);
determining, by the network side of the wireless communication system, whether the actual re-broadcasting times are greater than the set re-broadcasting times (702), releasing the cached application data if the actual re-transmitting times are greater than the set re-broadcasting times (703); otherwise returning to initiate the timer set for the trunk group (704).

18. A system for synchronously transmitting application data and voice in a trunk group, **characterized by** comprising a network side device and at least one terminal, wherein
the at least one terminal is configured to send application data which contains predefined content to the network side device via a dedicated channel uplink and a group call channel uplink of a trunk group; and
the network side device is configured to receive the application data sent from the terminal, and broadcast the application data received in the trunk group.

19. The system of Claim 18, wherein,
the at least one terminal is configured to send the application data via the dedicated channel uplink when the terminal is the talker, which occupies the dedicated channel uplink, in the trunk group; and
the at least one terminal is configured to send the application data via the group call channel uplink of the trunk group when the terminal is a listener in the trunk group and the group call channel uplink of the trunk group is occupied by the listener.

20. A terminal for synchronously transmitting application data and voice in a trunk group, comprising:
a first unit, configured to send application data which contains predefined content to a network side device via a dedicated channel uplink; and
a second unit, configured to send the application data to the network side device via a group call channel uplink of a trunk group.

21. The terminal of Claim 20, wherein
the first unit is configured to send the application data via the dedicated channel uplink when the terminal is the talker , which occupies the dedicated channel uplink, in the trunk group; and
the second unit is configured to send the application data via the group call channel uplink of the trunk group when the terminal is a listener in the trunk group and the group call channel uplink of the trunk group is occupied by the listener.

## Patentansprüche

1. Verfahren zum synchronen Übertragen von Anwendungsdaten und Sprache in einem Bündel, **gekennzeichnet durch** die folgenden Schritte:
Senden von Anwendungsdaten, die vordefinierten Inhalt enthalten, **durch** einen Talker oder einen Listener zu der Netzseite eines drahtlosen Kommunikationssystems, wobei die Anwendungsdaten und Sprachdaten von dem Talker, die eine Aufwärtsstrecke des dedizierten Kanals eines Bündels belegen, über die Aufwärtsstrecke des dedizierten Kanals übertragen werden und die Anwendungsdaten von dem Listener über eine Aufwärtsstrecke eines Gruppenrufkanals des Bündels übertragen werden, wenn die Aufwärtsstrecke des Gruppenrufkanals des Bündels durch den Listener belegt wird;
Empfangen der von dem Talker oder dem Listener gesendeten Anwendungsdaten durch die Netzseite des drahtlosen Kommunikationssystems und Rundsenden der Anwendungsdaten in dem Bündel.

2. Verfahren nach Anspruch 1, wobei das Senden der Anwendungsdaten zu der Netzseite des drahtlosen Kommunikationssystems durch den Talker Folgendes umfasst:
Senden einer Nachricht zu der Netzseite des drahtlosen Kommunikationssystems durch den Talker über die durch den Talker belegte Aufwärtsstrecke des dedizierten Kanals, wobei die Nachricht die Anwendungsdaten führt.

3. Verfahren nach Anspruch 2, wobei das Senden der Nachricht durch den Talker zu der Netzseite des drahtlosen Kommunikationssystems über die durch den Talker belegte Aufwärtsstrecke des dedizierten Kanals Folgendes umfasst:
Senden der Nachricht zu einer Basissender-/-empfängerstation BTS auf der Netzseite des drahtlosen Kommunikationssystems durch den Talker über die durch den Talker belegte Aufwärtsstrecke des dedizierten Kanals (100) (200) (300); und
Übermitteln der die Anwendungsdaten führenden Nachricht durch die BTS zu einer Basisstationssteuerung BSC1 auf der Netzseite des drahtlosen Kommunikationssystems (101) (201) (301).

4. Verfahren nach Anspruch 3, wobei das Empfangen der von dem Talker gesendeten Anwendungsdaten durch die Netzseite des drahtlosen Kommunikationssystems und das Rundsenden der Anwendungsdaten Folgendes umfassen:
Empfangen der die Anwendungsdaten führenden Nachricht durch die BSC1 und Übermitteln der Nachricht zu der Mobilvermittlungsstelle MSC1, zu der die BSC1 gehört (202);
Erhalten der in der Nachricht geführten Anwendungsdaten durch die MSC1, Übermitteln einer ersten Benachrichtigungsnachricht, die die Anwendungsdaten führt, zu der BSC1 (203) und Übermitteln der Anwendungsdaten zu der MSC2, zu der die BSC2 gehört (204);
Rundsenden der Anwendungsdaten durch die BSC1 über eine Abwärtsstrecke des Gruppenrufkanals des durch die BSC1 verwalteten Bündels und eine durch den Talker belegte Abwärtsstrecke des dedizierten Kanals (206);
Übermitteln einer zweiten Benachrichtigungsnachricht, die die Anwendungsdaten führt, durch die MSC2 zu der BSC2 (205); und
Rundsenden der Anwendungsdaten durch die BSC2 über eine Abwärtsstrecke des Gruppenrufkanals des durch die BSC2 verwalteten Bündels (207).

5. Verfahren nach Anspruch 3, wobei das Empfangen der von dem Talker gesendeten Anwendungsdaten durch die Netzseite des drahtlosen Kommunikationssystems und das Rundsenden der Anwendungsdaten Folgendes umfassen:
Empfangen der die Anwendungsdaten führenden Nachricht durch die BSC1 (201); und
Rundsenden der Anwendungsdaten durch die BSC1 über eine Abwärtsstrecke des Gruppenrufkanals des Bündels und eine durch den Talker belegte Abwärtsstrecke des dedizierten Kanals (206).

6. Verfahren nach Anspruch 5, ferner mit dem folgenden Schritt:
Setzen einer ersten Anwendungsdaten-Weiterleitungsindikation in der BSC1.

7. Verfahren nach einem der Ansprüche 2 bis 6, wobei
die Nachricht ferner eine Identität des Talkers führt.

8. Verfahren nach Anspruch 1, wobei das Senden der Anwendungsdaten zu der Netzseite des drahtlosen Kommunikationssystems durch den Listener Folgendes umfasst:
Senden einer Nachricht Set Asynchronous Balanced Mode SABM durch den Listener zu der Netzseite des drahtlosen Kommunikationssystems über die Aufwärtsstrecke des Gruppenrufkanals des Bündels (404) (504) (604), wobei die SABM-Nachricht die Anwendungsdaten und eine Identität des Listeners führt.

9. Verfahren nach Anspruch 8, wobei das Empfangen der von dem Listener gesendeten Anwendungsdaten durch die Netzseite des drahtlosen Kommunikationssystems und das Rundsenden der Anwendungsdaten Folgendes umfassen:
Empfangen der die Anwendungsdaten führenden SABM-Nachricht durch die BSC3 auf der Netzseite des drahtlosen Kommunikationssystems (506) und Übermitteln der SABM-Nachricht zu der MSC3, zu der die BSC3 gehört (507);
Erhalten der Anwendungsdaten durch die MSC3, Übermitteln einer die Anwendungsdaten führenden dritten Benachrichtigungsnachricht zu der BSC3 (513) und Übermitteln der Anwendungsdaten zu der MSC4, zu der die BSC4 gehört (514);
Rundsenden der Anwendungsdaten durch die BSC3 über eine Abwärtsstrecke des Gruppenrufkanals des durch die BSC3 verwalteten Bündels und eine durch den Talker belegte Abwärtsstrecke des dedizierten Kanals (516);
Übermitteln einer die Anwendungsdaten führenden vierten Benachrichtigungsnachricht durch die MSC4 zu der BSC4 (515); und
Rundsenden der Anwendungsdaten durch die BSC4 über eine Abwärtsstrecke des Gruppenrufkanals des durch die BSC4 verwalteten Bündels (517).

10. Verfahren nach Anspruch 8, wobei das Empfangen der von dem Listener gesendeten Anwendungsdaten durch die Netzseite des drahtlosen Kommunikationssystems und das Rundsenden der Anwendungsdaten Folgendes umfassen:
Empfangen der die Anwendungsdaten führenden SABM-Nachricht durch die BSC3 (506); und
Rundsenden der Anwendungsdaten durch die BSC3 über eine Abwärtsstrecke des Gruppenrufkanals des durch die BSC3 verwalteten Bündels und eine durch den Talker belegte Abwärtsstrecke des dedizierten Kanals (516).

11. Verfahren nach Anspruch 10, ferner mit dem folgenden Schritt:
Setzen einer zweiten Anwendungsdaten-Weiterleitungsindikation in der BSC3.

12. Verfahren nach einem der Ansprüche 8 bis 11, wobei das Verfahren vor dem Senden der SABM-Nachricht durch den Listener ferner Folgendes umfasst:
Senden einer Aufwärtsstreckenzugriffsnachricht durch den Listener zu der Netzseite des drahtlosen Kommunikationssystems (401) (501) (601); und
Senden einer Aufwärtsstreckengewährungsnachricht durch die Netzseite des drahtlosen Kommunikationssystems (403) (503) (603).

13. Verfahren nach Anspruch 12, wobei
die Aufwärtsstreckenzugriffsnachricht eine Herstellungsursache führt, wobei die Herstellungsursache angibt, dass die Aufwärtsstreckenzugriffsnachricht zum Senden der Anwendungsdaten verwendet wird.

14. Verfahren nach einem der Ansprüche 8 bis 11, wobei das Verfahren nach dem Senden der SABM-Nachricht durch den Listener ferner Folgendes umfasst:
Senden eines Unnumbered Acknowledge UA der SABM-Nachricht durch die Netzseite des drahtlosen Kommunikationssystems zu dem Listener (405) (505) (605).

15. Verfahren nach einem der Ansprüche 8 bis 11, ferner mit dem folgenden Schritt:
Freigeben der durch den Listener belegten Aufwärtsstrecke des Gruppenrufkanals.

16. Verfahren nach Anspruch 1, ferner mit dem folgenden Schritt:
erneutes Rundsenden der Anwendungsdaten.

17. Verfahren nach Anspruch 16, ferner mit dem folgenden Schritt: Setzen eines Neurundsendeintervalls und von Neurundsendezeiten, wobei das Neurundsenden der Anwendungsdaten Folgendes umfasst:
Cache-Speichern der Anwendungsdaten durch die Netzseite des drahtlosen Kommunikationssystems (700);
Einleiten eines für das Bündel gesetzten Timers, Rundsenden der Cache-gespeicherten Anwendungsdaten über eine durch den Talker belegte Abwärtsstrecke des dedizierten Kanals und eine Abwärtsstrecke des Gruppenrufkanals nach Warten für den Zeitraum des Neurundsendeintervalls und Aktualisieren tatsächlicher Neurundsendezeiten (701);
Bestimmen durch die Netzseite des drahtlosen Kommunikationssystems, ob die tatsächlichen Neurundsendezeiten größer als die gesetzten Neurundsendezeiten sind (702), Freigeben der Cache-gespeicherten Anwendungsdaten, wenn die tatsächlichen Neuübertragungszeiten größer als die gesetzten Neurundsendezeiten sind (703);
andernfalls Zurückkehren zu dem Einleiten des für das Bündel gesetzten Timers (704).

18. System zum synchronen Übertragen von Anwendungsdaten und Sprache in einem Bündel, **dadurch gekennzeichnet, dass** es eine netzseitige Einrichtung und mindestens ein Endgerät umfasst, wobei
das mindestens eine Endgerät dafür ausgelegt ist, Anwendungsdaten, die vordefinierten Inhalt enthalten, über eine Aufwärtsstrecke des dedizierten Kanals und eine Aufwärtsstrecke des Gruppenrufkanals eines Bündels zu der netzseitigen Einrichtung zu senden; und die netzseitige Einrichtung dafür ausgelegt ist, die von dem Endgerät gesendeten Anwendungsdaten zu empfangen und die empfangenen Anwendungsdaten in dem Bündel rundzusenden.

19. System nach Anspruch 18, wobei
das mindestens eine Endgerät dafür ausgelegt ist, die Anwendungsdaten über die Aufwärtsstrecke des dedizierten Kanals zu senden, wenn in dem Bündel das Endgerät der Talker ist, der die Aufwärtsstrecke des dedizierten Kanals belegt; und das mindestens eine Endgerät dafür ausgelegt ist, die Anwendungsdaten über die Aufwärtsstrecke des Gruppenruflcanals des Bündels zu senden, wenn in dem Bündel das Endgerät ein Listener ist und die Aufwärtsstrecke des Gruppenrufkanals des Bündels durch den Listener belegt wird.

20. Endgerät zum synchronen Übertragen von Anwendungsdaten und Sprache in einem Bündel, umfassend:
eine erste Einheit, die dafür ausgelegt ist, Anwendungsdaten, die vordefinierten Inhalt enthalten, über eine Aufwärtsstrecke des dedizierten Kanals zu einer netzseitigen Einrichtung zu senden; und
eine zweite Einheit, die dafür ausgelegt ist, die Anwendungsdaten über eine Aufwärtsstrecke des Gruppenrufkanals eines Bündels zu der netzseitigen Einrichtung zu senden.

21. Endgerät nach Anspruch 20, wobei
die erste Einheit dafür ausgelegt ist, die Anwendungsdaten über die Aufwärtsstrecke des dedizierten Kanals zu senden, wenn in dem Bündel das Endgerät der Talker ist, der die Aufwärtsstrecke des dedizierten Kanals belegt; und
die zweite Einheit dafür ausgelegt ist, die Anwendungsdaten über die Aufwärtsstrecke des Gruppenrufkanals des Bündels zu senden, wenn in dem Bündel das Endgerät ein Listener ist und die Aufwärtsstrecke des Gruppenrufkanals des Bündels durch den Listener belegt wird.

## Revendications

1. Procédé de transmission synchrone de données d'application et de voix dans un faisceau de lignes, **caractérisé en ce qu'**il comprend :
l'envoi, par un locuteur ou un auditeur, de données d'application qui contiennent un contenu prédéfini au côté réseau d'un système de communication sans fil, les données d'application et les données de voix provenant du locuteur qui occupent une liaison montante à canal dédié d'un faisceau de lignes étant transmises par l'intermédiaire de la liaison montante à canal dédié, et les données d'application provenant de l'auditeur étant transmises par l'intermédiaire d'une liaison montante à canal d'appel groupé du faisceau de lignes quand la liaison montante à canal d'appel groupé du faisceau de lignes est occupée par l'auditeur ;
la réception, par le côté réseau du système de communication sans fil, des données d'application envoyées par le locuteur ou l'auditeur, et la diffusion des données d'application dans le faisceau de lignes.

2. Procédé selon la revendication 1, dans lequel l'envoi, par le locuteur, des données d'application au côté réseau du système de communication sans fil comprend :
l'envoi, par le locuteur, d'un message au côté réseau du système de communication sans fil par l'intermédiaire de la liaison montante à canal dédié occupée par le locuteur, le message portant les données d'application.

3. Procédé selon la revendication 2, dans lequel l'envoi, par le locuteur, du message au côté réseau du système de communication sans fil par l'intermédiaire de la liaison montante à canal dédié occupée par le locuteur comprend :
l'envoi, par le locuteur, du message à une Station Emettrice-Réceptrice de Base, BTS, sur le côté réseau du système de communication sans fil par l'intermédiaire de la liaison montante à canal dédié occupée par le locuteur (100) (200) (300) ; et
le transfert, par la BTS, du message portant les données d'application à une Unité de Commande de Station de Base, BSC1, sur le côté réseau du système de communication sans fil (101) (201) (301).

4. Procédé selon la revendication 3, dans lequel la réception, par le côté réseau du système de communication sans fil, des données d'application envoyées par le locuteur , et la diffusion des données d'application comprennent :
la réception, par la BSC1, du message portant les données d'application, et le transfert du message à un Centre de Commutation de Services Mobiles, MSC1, auquel appartient la BSC1 (202) ;
l'obtention, par le MSC1, des données d'application portées par le message, le transfert d'un premier message de notification portant les données d'application à la BSC1 (203) et le transfert des données d'application à un MSC2 auquel appartient une BSC2 (204) ;
la diffusion, par la BSC1, des données d'application par l'intermédiaire d'une liaison descendante à canal d'appel groupé du faisceau de lignes géré par la BSC1 et d'une liaison descendante à canal dédié occupée par le locuteur (206) ;
le transfert, par le MSC2, d'un second message de notification portant les données d'application à la BSC2 (205) ; et
la diffusion, par la BSC2, des données d'application par l'intermédiaire d'une liaison descendante à canal d'appel groupé du faisceau de lignes géré par la BSC2 (207).

5. Procédé selon la revendication 3, dans lequel la réception, par le côté réseau du système de communication sans fil, des données d'application envoyées par le locuteur, et la diffusion des données d'application comprennent :
la réception, par la BSC1, du message portant les données d'application (201) ; et
la diffusion, par la BSC1, des données d'application par l'intermédiaire d'une liaison descendante à canal d'appel groupé du faisceau de lignes et d'une liaison descendante à canal dédié occupée par le locuteur (206).

6. Procédé selon la revendication 5, comprenant en outre :
l'établissement d'une première indication de transmission de données d'application dans la BSC1.

7. Procédé selon l'une quelconque des revendications 2 à 6, dans lequel :
le message porte en outre une identité du locuteur.

8. Procédé selon la revendication 1, dans lequel l'envoi, par l'auditeur, des données d'application au côté réseau du système de communication sans fil comprend :
l'envoi, par l'auditeur, d'un message de Mode Equilibré Asynchrone Fixé, SABM, au côté réseau du système de communication sans fil par l'intermédiaire de la liaison montante à canal d'appel groupé du faisceau de lignes (404) (504) (604), le message SABM portant les données d'application et une identité de l'auditeur.

9. Procédé selon la revendication 8, dans lequel la réception, par le côté réseau du système de communication sans fil, des données d'application envoyées par l'auditeur, et la diffusion des données d'application comprennent :
la réception, par une BSC3, sur le côté réseau du système de communication sans fil, du message SABM portant les données d'application (506), et le transfert du message SABM à un MSC3 auquel appartient la BSC3 (507) ;
l'obtention, par le MSC3, des données d'application, le transfert d'un troisième message de notification portant les données d'application à la BSC3 (513) et le transfert des données d'application à un MSC4 auquel appartient une BSC4 (514) ;
la diffusion, par la BSC3, des données d'application par l'intermédiaire d'une liaison descendante à canal d'appel groupé du faisceau de lignes géré par la BSC3 et d'une liaison descendante à canal dédié occupée par le locuteur (516) ;
le transfert, par le MSC4, d'un quatrième message de notification portant les données d'application à la BSC4 (515) ; et
la diffusion, par la BSC4, des données d'application par l'intermédiaire d'une liaison descendante à canal d'appel groupé du faisceau de lignes géré par la BSC4 (517).

10. Procédé selon la revendication 8, dans lequel la réception, par le côté réseau du système de communication sans fil, des données d'application envoyées par l'auditeur, et la diffusion des données d'application comprennent :
la réception, par la BSC3, du message SABM portant les données d'application (506) ; et
la diffusion, par la BSC3, des données d'application par l'intermédiaire d'une liaison descendante à canal d'appel groupé du faisceau de lignes géré par la BSC3 et d'une liaison descendante à canal dédié occupée par le locuteur (516).

11. Procédé selon la revendication 10, comprenant en outre :
l'établissement d'une seconde indication de transmission de données d'application dans la BSC3.

12. Procédé selon l'une quelconque des revendications 8 à 11, comprenant en outre, avant l'envoi, par l'auditeur, du message SABM :
l'envoi, par l'auditeur, d'un message d'Accès à la Liaison Montante au côté réseau du système de communication sans fil (401) (501) (601) ; et
l'envoi, par le côté réseau du système de communication sans fil, d'un Grand Message de Liaison Montante (403) (503) (603).

13. Procédé selon la revendication 12, dans lequel
le message d'Accès à la Liaison Montante porte une cause d'établissement, la cause d'établissement indiquant que le message d'Accès à la Liaison Montante est utilisé pour envoyer les données d'application.

14. Procédé selon l'une quelconque des revendications 8 à 11, comprenant en outre, après l'envoi, par l'auditeur, du message SABM :
l'envoi, par le côté réseau du système de communication sans fil, d'un Acquittement Non Numéroté, UA, du message SABM, à l'auditeur (405) (505) (605).

15. Procédé selon l'une quelconque des revendications 8 à 11, comprenant en outre :
la libération de la liaison montante à canal d'appel groupé occupée par l'auditeur.

16. Procédé selon la revendication 1, comprenant en outre :
la rediffusion des données d'application.

17. Procédé selon la revendication 16, comprenant en outre : le réglage d'un intervalle de rediffusion et de temps de rediffusion, la rediffusion des données d'application comprenant :
la mise en antémémoire, par le côté réseau du système de communication sans fil, des données d'application (700) ;
le lancement d'une temporisation réglée pour le faisceau de lignes, la diffusion des données d'application mises en antémémoire par l'intermédiaire d'une liaison descendante à canal dédié occupée par le locuteur et d'une liaison descendante à canal d'appel groupé après avoir attendu pendant la période de l'intervalle de rediffusion, et l'actualisation des temps de rediffusion effectifs (701) ;
la détermination, par le côté réseau du système de communication sans fil, du fait que les temps de rediffusion effectifs sont supérieurs ou non aux temps de rediffusion réglés (702), la libération des données d'application mises en antémémoire si les temps de retransmission effectifs sont supérieurs aux temps de rediffusion réglés (703) ; et dans le cas contraire, le retour au lancement de la temporisation réglée pour le faisceau de lignes (704).

18. Système de transmission synchrone de données d'application et de voix dans un faisceau de lignes, **caractérisé en ce qu'**il comprend un dispositif côté réseau et au moins un terminal, dans lequel
l'au moins un terminal est configuré pour envoyer des données d'application qui contiennent un contenu prédéfini au dispositif côté réseau par l'intermédiaire d'une liaison montante à canal dédié et d'une liaison montante à canal d'appel groupé d'un faisceau de lignes ; et
le dispositif côté réseau est configuré pour recevoir les données d'application envoyées par le terminal, et diffuser les données d'application reçues dans le faisceau de lignes.

19. Système selon la revendication 18, dans lequel,
l'au moins un terminal est configuré pour envoyer les données d'application par l'intermédiaire de la liaison montante à canal dédié quand le terminal est le locuteur, lequel occupe la liaison montante à canal dédié, dans le faisceau de lignes ; et
l'au moins un terminal est configuré pour envoyer les données d'application par l'intermédiaire de la liaison montante à canal d'appel groupé du faisceau de lignes quand le terminal est un auditeur dans le faisceau de lignes et la liaison montante à canal d'appel groupé du faisceau de lignes est occupée par l'auditeur.

20. Terminal de transmission synchrone de données d'application et de voix dans un faisceau de lignes, comprenant :
une première unité, configurée pour envoyer des données d'application qui contiennent un contenu prédéfini à un dispositif côté réseau par l'intermédiaire d'une liaison montante à canal dédié ; et
une seconde unité, configurée pour envoyer les données d'application au dispositif côté réseau par l'intermédiaire d'une liaison montante à canal d'appel groupé d'un faisceau de lignes.

21. Terminal selon la revendication 20, dans lequel
la première unité est configurée pour envoyer les données d'application par l'intermédiaire de la liaison montante à canal dédié quand le terminal est le locuteur, lequel occupe la liaison montante à canal dédié, dans le faisceau de lignes ; et
la seconde unité est configurée pour envoyer les données d'application par l'intermédiaire de la liaison montante à canal d'appel groupé du faisceau de lignes quand le terminal est un auditeur dans le faisceau de lignes et la liaison montante à canal d'appel groupé du faisceau de lignes est occupée par l'auditeur.
